# EUROPÄISCHE PATENTANMELDUNG

(11) **EP 0 766 068 A2**
(43) Veröffentlichungstag der Anmeldung: **02.04.1997**
(21) Anmeldenummer: 96106812.9
(22) Anmeldetag: 30.04.1996
(51) Int. Cl.: G01D 5/38

(54) **Optische Vorrichtung zum Messen physikalischer Grössen**

(30) Priorität: 28.09.1995 DE 19536141
(71) Anmelder: ROBERT BOSCH GMBH, 70442 Stuttgart (DE)
(72) Erfinder: Drabarek, Pawel, Ing., 76233 Tiefenbronn-Mühlhausen (DE)

(57) **Zusammenfassung**

Die Erfindung bezieht sich auf eine optische Vorrichtung zum Messen physikalischer Größen, bei der in einer optischen Strecke eine erste beugende Gitterstruktur und nachfolgend ein zumindest teilweise längs eines Kreisrings verlaufendes Meßgitter angeordnet sind, dessen gebeugte Strahlung mittels Strahlungssensoren erfaßt und zum Bereitstellen eines Meßergebnisses in Form elektrischer Signale zu einer Auswerte-Anordnung weitergegeben wird. Eine zuverlässige und genaue Messung der physikalischen Größen wird dadurch unterstützt, daß die erste Gitterstruktur als mindestens ein Korrekturgitter ausgebildet ist, mit dem eine durch die Geometrie des Meßgitters verzerrte Wellenfront derart vorkorrigiert wird, daß die vom Meßgitter gebeugte Strahlung ebene und parallele Wellenfront besitzt.

## Beschreibung

### Stand der Technik

Die Erfindung bezieht sich auf eine optische Vorrichtung zum Messen physikalischer Größen, bei der in einer optischen Strekke zum Erzeugen gebeugter Strahlung mindestens eine erste Gitterstruktur und nachfolgend ein zumindest teilweise längs eines Kreisrings verlaufendes Meßgitter angeordnet sind, dessen gebeugte Strahlung mittels einer Sensoreinrichtung erfaßt und zum Bereitstellen eines Meßergebnisses in Form elektrischer Signale zu einer Auswerte-Anordnung weitergegeben wird.

Eine Vorrichtung dieser Art ist in der DE 43 18 129 A1 als ein Ausführungsbeispiel als bekannt ausgewiesen. Bei dieser bekannten Vorrichtung ist ein Meßgitter auf einer Kreisbahn angeordnet, die eine Drehbewegung gegenüber einer in der optischen Strecke davor angeordneten Gitterstruktur in Form zweier Referenzgitter ausführt. Mit beiden Referenzgittern werden je zwei auf diese einfallende Meßstrahlungen derartig gebeugt, daß bezüglich bestimmter Beugungsordnungen die Meßstrahlungen jedes Referenzgitters auf einem Auftreffort auf dem Meßgitter zusammentreffen und interferieren, wobei sich die Auftrefforte auf dem Meßgitter diametral gegenüberliegen. Das Meßgitter ist derart ausgelegt, daß die beiden an den jeweiligen Auftrefforten auftreffenden Meßstrahlungen in eine gemeinsame Richtung gebeugt werden, so daß von jedem Auftreffort des Meßgitters jeweils nur eine gebeugte Strahlung ausgeht. Die gebeugte Strahlung wird mit Strahlungssensoren aufgenommen, deren elektrischen Ausgangssignale in einer Auswerte-Anordnung zum Bereitstellen eines Meßergebnisses verarbeitet werden. Mit dieser Vorrichtung können Drehbewegungen sehr hoch, d.h. prinzipiell bis in den Nanometerbereich aufgelöst werden. Für die Auswertung können entweder direkt Pegeländerungen der interferierten Strahlung, die infolge der Relativbewegung zwischen Referenzgitter und Meßgitter entstehen, oder - bei Anwendung eines heterodyn-interferometrischen Verfahrens - Änderungen von Phasenbeziehungen der interferierten Strahlung herangezogen werden. Auch bei der Auswertung der Phasenbeziehungen werden meßtechnisch Intensitätsänderungen erfaßt. Bei der hoch auflösenden Bewegungsmessung ergeben sich allerdings in der Praxis Schwierigkeiten.

### Vorteile der Erfindung

Der Erfindung liegt die Aufgabe zugrunde, eine optische Vorrichtung der eingangs beschriebenen Art so weiterzubilden, daß die physikalischen Größen genauer und zuverlässiger gemessen werden können.

Diese Aufgabe wird mit den im Patentanspruch 1 angegebenen Merkmalen gelöst. Hiernach ist also vorgesehen, daß die erste Gitterstruktur als mindestens ein Korrekturgitter ausgebildet ist, mit dem eine durch die Geometrie des Meßgitters verzerrte Wellenfront derart vorkorrigiert wird, daß die vom Meßgitter gebeugte Strahlung eine ebene und parallele Wellenfront besitzt.

Hierdurch werden Verzerrungen der von dem Meßgitter gebeugten und auf die Sensoren gerichteten Strahlung exakt ausgerichtet, so daß örtliche und/oder zeitliche Intensitätsänderungen bzw. darin enthaltene Phasenbeziehungen genau und zuverlässig erfaßbar sind. Störungen, die in den Intensitätsverteilungen der von dem Meßgitter gebeugten Strahlung an sich entstehen, sind mit den erfindungsgemäßen Maßnahmen ausgeschlossen. Solche Störungen ergeben sich bei kreisförmigen Meßgittern insbesondere dadurch, daß radial mehr zum Mittelpunkt hin angeordnete Gitterbereiche eine kleinere Gitterkonstante, d.h. z.B. einen kleineren Strichabstand aufweisen, als radial weiter außenliegende Bereiche.

Ein vorteilhafter Aufbau der optischen Vorrichtung besteht darin, daß das Korrekturgitter gleichzeitig als Referenzgitter dient, mit dem eine auf dieses auftreffende optische Meßstrahlung unter einem für das Meßgitter bestimmten Winkel gebeugt wird. Bei diesem Aufbau erübrigen sich zusätzliche Referenzgitter.

Ist vorgesehen, daß die Beugungswinkel des Korrekturgitters und des Meßgitters derart entsprechend sind, daß die auf das Korrekturgitter auftreffende Meßstrahlung parallel zu der von dem Meßgitter gebeugten Strahlung verläuft, so können der Aufbau des Korrekturgitters und des Meßgitters im Grundaufbau weitgehend übereinstimmend sein, und der Gesamtaufbau der optischen Vorrichtung sowie die Justierung werden vereinfacht.

Ein Drehgeber zum Erfassen einer Relativbewegung zwischen zwei bewegten Teilen ist vorteilhafterweise so aufgebaut, daß das Meßgitter auf einem rotierenden zweiten Teil angeordnet ist und daß das Korrekturgitter auf einem feststehenden oder konzentrisch zu dem Meßgitter rotierenden ersten Teil angeordnet ist.

Die Erfindung wird nachfolgend anhand eines Ausführungsbeispiels unter Bezugnahme auf die Zeichnungen näher erläutert. Es zeigen:
- Fig. 1: eine optische Vorrichtung zum Messen einer Drehbewegung in Seitenansicht,
- Fig. 1a: eine Querschnittsansicht der in Figur 1 gezeigten Vorrichtung von der Schnittlinie A-A' aus,
- Fig. 1b: eine Draufsicht der in Figur 1 gezeigten Vorrichtung längs der Schnittlinie B-B',
- Fig. 2A: eine schematische Detailansicht eines in den Figuren 1 bis 1b gezeigten Meßgitters im Ausschnitt und
- Fig. 2B: einen weiteren Ausschnitt des in Figur 2A gezeigten Meßgitters mit einer auftreffenden und gebeugten Meßstrahlung.

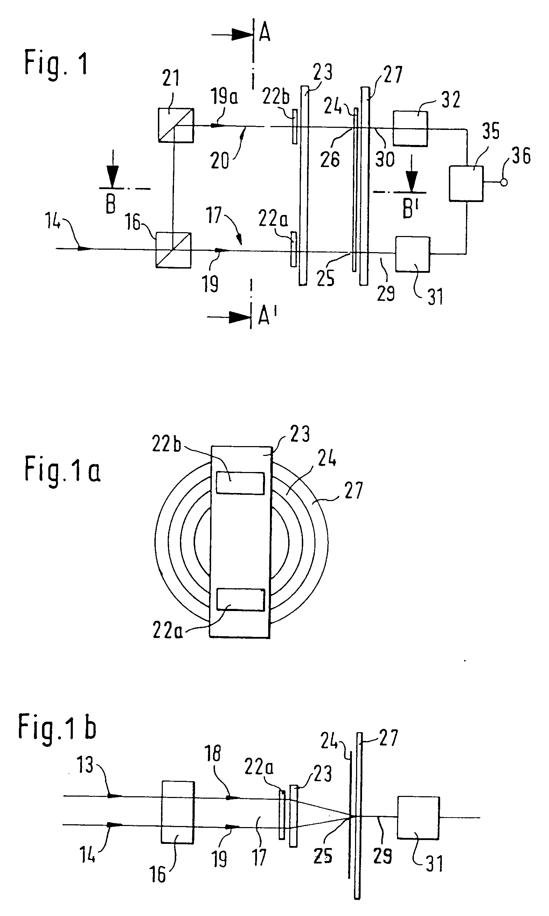

Die Fig. 1 zeigt als Ausführungsbeispiel eine optische Vorrichtung zum Messen physikalischer Größen in Form eines Drehgebers. Diese Vorrichtung dient zum Messen einer relativen Drehbewegung zwischen einem ersten Teil 23 und einem zweiten Teil 27. Auf dem Teil 23 sind als Gitterstruktur zwei Korrekturgitter 22a und 22b angeordnet, während auf dem im Strahlengang dahinter beabstandet angeordneten zweiten Teil 27 ein Meßgitter 24 auf einer Kreisbahn angeordnet ist, wobei die Korrekturgitter 22b und 22a bezüglich der Drehachse des Meßgitters 24 diametral angeordnet sind. Gemäß den Fig. 1, 1a und 1b werden eine erste Strahlung 13 (vgl. Fig. 1b) und eine zweite Strahlung 14 von einem Strahlteiler 16 aufgeteilt, wobei der senkrecht abgelenkte Teilstrahl mittels einer weiteren Umlenkanordnung 21 parallel zu einer geradlinig durch den Strahlteiler 16 verlaufenden ersten und zweiten Meßstrahlung 18, 19 als dritte und vierte Meßstrahlung ausgerichtet wird, wobei nur die vierte Meßstrahlung 19a gezeigt ist. Die parallelen ersten und zweiten Meßstrahlungen 18, 19 treffen auf das in Fig. 1 untere Korrekturgitter 22a und werden von diesem auf einen Auftreffort 25 des Meßgitters 24 gebeugt, während die dritte und vierte Meßstrahlung 19a von dem in Fig. 1 oberen Korrekturgitter 22b auf einen zweiten Auftreffort 26 des Korrekturgitters 24 gebeugt werden, wobei der zweite Auftreffort 26 dem ersten Auftreffort 25 diametral gegenüberliegt. In Fig. 1b ist entsprechend der Draufsicht gemäß der Schnittlinie B-B' nur der untere Strahlengang mit dem entsprechenden Auftreffort 25 dargestellt. Die auf das Meßgitter 24 auftreffenden Meßstrahlungen werden an den jeweiligen Auftrefforten abermals gebeugt, und zwar in eine gemeinsame Richtung, so daß von den Auftrefforten 25 und 26 jeweils eine gebeugte, interferierte Strahlung 29 bzw. 30 ausgeht, die auf Strahlungssenosren 31 bzw. 32 fallen und von dort als elektrische Signale an eine Auswerte-Anordnung 35 weitergeleitet werden, die ein Meßergebnis 36 bereitstellt.

Infolge einer relativen Drehbewegung zwischen dem ersten Teil 23 und dem zweiten Teil 27 ändert sich an einem bestimmten Ort der Wellenfront der gebeugten Strahlung 29 bzw. 30 infolge Interferenz der beiden jeweiligen Meßstrahlungen die Intensität. Diese Intensitätsänderung ergibt einen unterschiedlichen Pegel der Ausgangssignale der Sensoren 31 und 32, so daß eine Drehbewegung erfaßt werden kann, wobei die Auflösung prinzipiell bis in den Nanometerbereich möglich ist, wie in der DE 43 18 129 A1 genauer ausgeführt ist. Mit Hilfe heterodyn-interferometrischer Verfahren, die eine von zufälligen Intensitätsschwankungen unabhängige Messung von Phasenbeziehungen ermöglicht, kann die Drehbewegung noch störungssicherer gemessen werden. Auch hierauf ist in der genannten Druckschrift eingegangen.

Vorliegend sind die Gitterstrukturen im Unterschied zu der DE 43 18 129 A1 als Korrekturgitter ausgebildet, mit denen Verzerrungen, die durch das Meßgitter 24 bedingt sind, vorkorrigiert werden, so daß die interferierten, gebeugten Strahlungen 29, 30 einen weitgehend exakten, parallelen Intensitätsverlauf in den Wellenfronten zeigen.

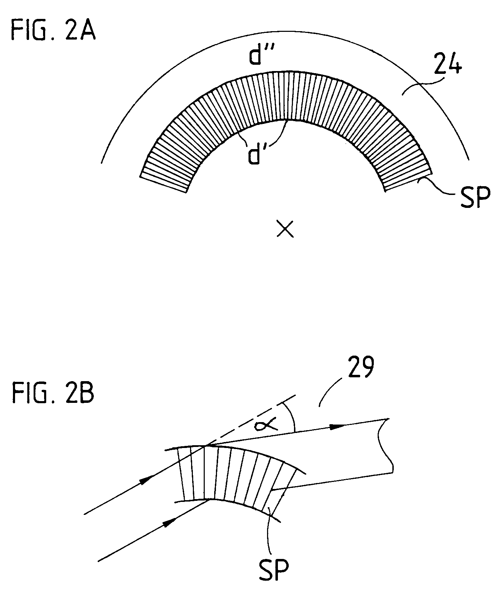

Aus den Fig. 2A und 2B ist ersichtlich, wie Verzerrungen der Wellenfronten der von dem Meßgitter 24 gebeugten Strahlung entstehen. Die Spur SP des Meßgitters 24 hat eine gewisse Breite. Dadurch ergeben sich je nach radialem Abstand vom Mittelpunkt über die Spur unterschiedliche Gitterkonstanten, wobei die kleinste Gitterkonstante (z.B. Strichabstand) auf der inneren Kreisbahn und die größte Gitterkonstante d'' auf der äußeren Kreisbahn auftreten. Dadurch ergeben sich Verzerrungen in der Wellenfront der von dem Meßgitter 24 gebeugten Strahlung 29, wie in Fig. 2B schematisch für einen Phasenverlauf der unter einem Winkel α gebeugten Strahlung 29 dargestellt ist. Ein solcher Phasenverlauf wird mittels der Korrekturgitter 22a, 22b vorab korrigiert, d.h. bereits die von den Korrekturgittern 22a, 22b gebeugte Meßstrahlung enthält eine abgestimmte, kompensierende Verzerrung der Wellenfronten.

Mit den beschriebenen Maßnahmen können die Intensitätsverläufe im Interferenzfeld mittels der nachfolgenden Strahlungssensoren 31 und 32 genau erfaßt und in der angeschlossenen Auswerte-Anordnung 35 exakt ausgewertet werden, ohne daß eine aufwendige Sensoreinrichtung zur Berücksichtigung örtlicher Verzerrungen vorgesehen sein muß.

## Patentansprüche

1. Optische Vorrichtung zum Messen physikalischer Größen, bei der in einer optischen Strecke zum Erzeugen gebeugter Strahlung mindestens eine erste Gitterstruktur und nachfolgend ein zumindest teilweise längs eines Kreisrings verlaufendes Meßgitter angeordnet sind, dessen gebeugte Strahlung mittels einer Sensoreinrichtung erfaßt und zum Bereitstellen eines Meßergebnisses in Form elektrischer Signale zu einer Auswerte-Anordnung weitergegeben wird,
dadurch gekennzeichnet,
daß die erste Gitterstruktur als mindestens ein Korrekturgitter (22a, 22b) ausgebildet ist, mit dem eine durch die Geometrie des Meßgitters (24) verzerrte Wellenfront derart vorkorrigiert wird, daß die vom Meßgitter (24) gebeugte Strahlung (29,30) eine ebene und parallele Wellenfront besitzt.

2. Optische Vorrichtung nach Anspruch 1,
dadurch gekennzeichnet,
daß das Korrekturgitter (22a, 22b) gleichzeitig als Referenzgitter dient, mit dem eine auf dieses auftreffende optische Meßstrahlung (18,19,19a) unter
einem für das Meßgitter (24) bestimmten Winkel gebeugt wird.

3. Optische Vorrichtung nach Anspruch 1 oder Anspruch 2,
dadurch gekennzeichnet,
daß die Beugungswinkel (α) des Korrekturgitters (22a, 22b) und des Meßgitters (24) derart entsprechend sind, daß die auf das Korrekturgitter (22a, 22b) auftreffende Meßstrahlung (18,19,19a) parallel zu der von dem Meßgitter (24) gebeugten Strahlung (29) verläuft.

4. Optische Vorrichtung nach einem der vorhergehenden Ansprüche,
dadurch gekennzeichnet,
daß das Meßgitter (24) auf einem rotierenden zweiten Teil (27) angeordnet ist und daß das Korrekturgitter (22a, 22b) auf einem feststehenden oder konzentrisch zu dem Meßgitter (24) rotierenden ersten Teil (23) angeordnet ist.
